# EUROPEAN PATENT APPLICATION

(11) **EP 3 627 369 A1**
(43) Date of publication of application: **25.03.2020**
(21) Application number: 18802172.9
(22) Date of filing: 15.05.2018
(51) Int. Cl.: G06F 21/60

(54) **METHOD FOR SETTING FORM FIELD OPERATION AUTHORITY OF WORKFLOW, AND METHOD FOR SETTING FORM FIELD OPERATION AUTHORITY OF APPROVAL NODE**

(30) Priority: 16.05.2017 CN 201710344977
(71) Applicant: Chengdu Qianniucao Information Technology Co., Ltd, Chengdu, Sichuan 610000 (CN)
(72) Inventor: CHEN, Dazhi, Meishan Sichuan 620000 (CN)
(74) Representative: Bandpay & Greuter
(86) International application number: PCT/CN2018/086923
(87) International publication number: WO 2018/210245

(57) **Abstract**

A method for setting form-field operation permission of a workflow is disclosed in the present invention. The workflow includes a start node and an approval node; the form-field operation permission of the start node and that of the approval node are set in different modes. In addition, a method for setting form-field operation permission of an approval node is also provided. The approval node includes one or more approvers, and the form-field operation permission of each approver in the approval node is customized, which specifically includes: selecting an approver from an approval node; obtaining default settings of the form-field operation permission; and modifying the default settings of the form-field operation permission according to an approval item of the selected approver in a workflow. The present invention shortens an approval cycle, reduces approval workloads, and enhances information security.

## Description

### BACKGROUND

### Technical Field

The present invention relates to a method for setting permission of a workflow in a management software system such as an ERP system, and more particularly to a method for setting form-field operation permission of a workflow and its approval node.

### Related Art

Role-based access control (RBAC) is one of the most researched and mature management mechanisms of database permission in recent years. It is considered to be an ideal candidate to replace conventional mandatory access control (MAC) and discretionary access control (DAC). Conventional discretionary access control has high flexibility but low security. Mandatory access control is highly secure but too restrictive. Role-based access control combines both above, and not only is easy to manage, but also reduces complexity, costs, and probability of errors. Therefore, it has been greatly developed in recent years. The basic idea of role-based access control (RBAC) is to divide different roles according to different functional positions in the view of enterprise organization, encapsulate the access permission of database resources in roles, and allow users to indirectly access database resources by assigning different roles to the users.

A large number of tables and views are often built in large application systems, which makes the management and permissions of database resources very complicated. It is very difficult for a user to directly manage the access and permissions of database resources. It requires a user to have a very thorough understanding of the database structure and to be familiar with the use of the SQL language. Once the application system structure or security requirements have changed, a large number of complex and cumbersome permission changes are required, and the security vulnerabilities caused by unexpected permission errors are very likely to occur. Therefore, designing a simple and efficient permission management method for large-scale application systems has become a common requirement for systems and system users.

The role-based permission control mechanism can manage the access permissions of system simply and efficiently, which greatly reduces the burden and cost of the permission management of system, and makes the permission management of system more compliant with the business management specifications of the application system.

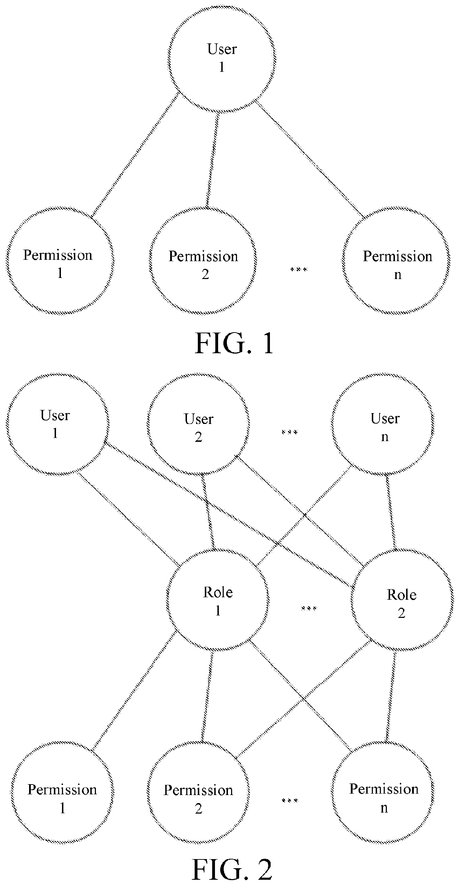

However, the conventional role-based permission management and workflow control methods for a user adopt the "role-to user one-to-many" relation mechanism, where the "role" has the nature of a group or class. That is, one role can simultaneously correspond to or be related to multiple users, and the role is similar to a post or a position or a type of work or other concepts. The permission granted to a user under this relation mechanism is basically divided into the following three forms: 1. As shown in FIG. 1, the permission is directly granted to the user, with the disadvantage that the workload is large and the operation is frequent and cumbersome. In the approval process, the approval operation subject of the approval node is a user, and at the workflow approval node, an employee or a user is selected directly as an approval subject. When changes on an employee have occurred (such as transfer or dimission), all processes related to the employee shall be adjusted accordingly. Especially, for changes on the employee in a management position of an enterprise, many approval processes are involved. As the adjustment of the processes involves large workloads, and is cumbersome, errors or omissions are likely to occur, affecting the normal operation of the enterprise and even causing unpredictable losses.

Even if the change only occurs in the approval permissions of the employee, it is still necessary to correspondingly adjust the processes related to the employee, and similar problems described above still occur.

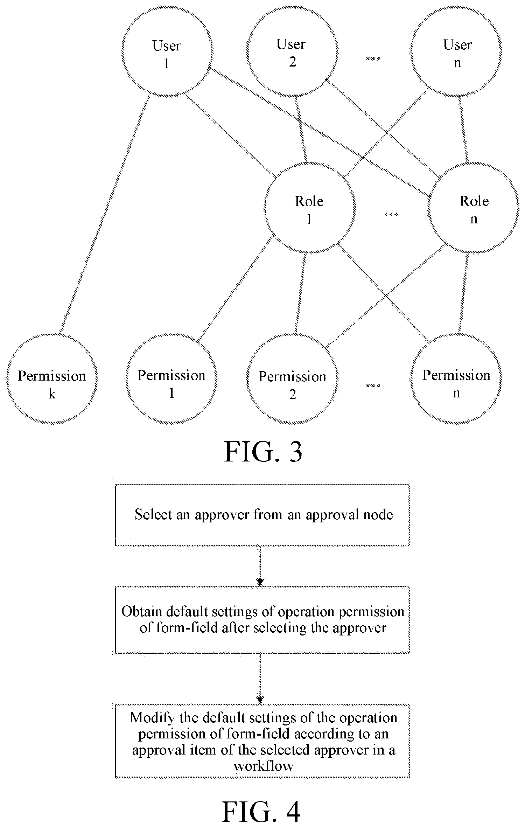

2. As shown in FIG. 2, the role (having the nature of a class/a group/a post/a type of work) is authorized (one role may be related to multiple users), the user obtains permissions through its role, and the approval operation subject is the role having the nature of a group or class. 3. As shown in FIG. 3, the above two methods are combined.

In the above descriptions, as both 2 and 3 need to authorize the role having the nature of a class or a group. The way of permission and workflow control through the role having the nature of a class/a group/a post/ a type of work has the following disadvantages:
1. Operations are difficult when the user's permission has changed: In the actual process of using a system, the user's permissions often need to be adjusted during the operation process. For example, in processing of the change of an employee's permissions, when the permissions of an employee related to the role have changed, it is improper to change the permissions of the entire role due to the change of the permissions of the individual employee, because the role is also related to other employees whose permissions remain unchanged. In response to this situation, either a new role is created to fit the employee whose permissions have changed, or permissions are directly granted to the employee (disengaged from a role) based on permission requirements. The above two processing methods not only take a long time but also cause mistakes easily for the role permission in the case of a large number of role permissions. It is cumbersome for a user to operate, and errors occur easily, resulting in loss to the system user.
   When the approval permissions of an employee or a user have changed, either the employee or the user is disengaged from the role, and at the workflow approval node, the employee or the user is directly selected as an approval subject, or a new role is added to meet the requirements of the approval process. In the first way, when changes on an employee have occurred (such as transfer or dimission), all processes related to the employee shall be adjusted accordingly. Especially, for changes on an employee in a management position of an enterprise, many approval processes are involved. As the adjustment of the processes involves large workloads, errors or omissions are likely to occur, affecting the normal operation of the enterprise and even causing unpredictable losses. Even if the change only occurs in the approval permissions of the employee, it is still necessary to correspondingly adjust the processes related to the employee, and similar problems described above still occur. In the second way, adding a role involves creation, relation, and permission of the role. Especially when there are many roles and many users related to the roles, it is difficult to remember which users are related to the role in particular.
2. It is difficult to remember the specific permissions contained in a role for a long time: If the role has many permission function points, over time, it is difficult to remember the specific permissions of the role, and it is even harder to remember the differences of permissions between roles with similar permissions. The permissions of similar roles are also easily confusable. If a new user needs to be related, it is impracticable to accurately determine how to select a relation.
3. Because user permissions have changed, it results in more and more roles created (if new roles are not created, it greatly increases direct permission to the user), and it is more difficult to distinguish specific differences of the permissions between the roles.
4. When a user is transferred from a post, if many permissions of the transferred user need to be assigned to other users, it is necessary to separate the permissions of the transferred user and create roles to relate to the other users. Such operations are not only complicated and time-consuming, but also prone to errors.

Currently, there are generally two types of permission for process nodes. One is that all nodes adopt permissions in the system, and the other is to set the same permissions for all nodes.

When all nodes adopt permissions in the system, some approvers cannot view or modify the related fields in a form, and therefore cannot complete a normal approval process. If the field cannot be modified at the approval node, it has to return to an initiator if modification is required, thus prolonging an approval cycle. In Example 1, in approval of a reimbursement form, when the last approver considers that the reimbursement amount needs to be modified during approval, the reimbursement form needs to be returned to an initiator, and the initiator re-initiates a new process after modification. Therefore, approval with the related approvers needs to be performed again, which increases the workloads of the related approvers and also greatly extends the approval cycle. This is more evident for an approver with a large number of processes. In Example 2, a sales contract in a Shanghai branch company needs to be approved by a person in a Chengdu branch company, and the approver in the Chengdu branch company does not have the permission to view the sale contract of the Shanghai branch company (because the approver in the Chengdu branch company is only granted the system permission to view sales contracts in the Chengdu branch company, but is not granted the permission to view sales contracts in the Shanghai branch company; however, during setting an approval node for approving sales contracts in the Shanghai branch company, considering a relatively strong capability of a certain person in the Chengdu branch company, the person in the Chengdu branch company is selected into the approval node to serve as an approver at the approval node; when the approver approves the sales contract of the Shanghai branch company at the approval node, because permissions are not set for the approval node independently in the conventional approval process, and the approval node in the approval process adopts or still uses form permission corresponding to the approval process of the approver in the system, the approver's permission at the approval node adopts or still uses permission of a sales contract form in the system; moreover, because the approver only has the system permission to view sales contracts in the Chengdu branch company and does not have the permission to view sales contracts in the Shanghai branch company), in this case, the approver in the Chengdu branch company cannot view related content of the sales contract, thus failing to complete a normal approval process.

When the same permission is set for all the nodes, some approvers can view sensitive information that is unnecessary for their approval, causing the information to be spread in a larger range, which easily leads to information leakage and threatens information security. For example, in approval before a contract is signed, a financial approver mainly checks from the financial perspective whether the contract should be signed or not, and does not need to know contact information of a customer or the like. If the financial approver is granted the permission to view the contract information of the customer, it may lead to leakage of the contact information of the customer. In addition, in an approval process of a contract, an approver A is at the third and the fifth approval node. The technical requirements of products in the contract are approved at the third approval node, and therefore only technical-related information needs to be displayed at this approval node. A mode of transportation is approved at the fifth approval node, and therefore only transportation-related information is displayed. In the conventional method, the same permission is set for the approver A at all the approval nodes, which achieves setting different permissions according to different approval requirements of different approval nodes.

### SUMMARY

### Technical Problems

The purpose of the present invention is to overcome the deficiencies of the prior art, and provide a method for setting form-field operation permission of a workflow and its approval node to reduce an approval cycle, reduce approval workloads, and enhance information security.

### Solutions to Problems

### Technical Solutions

The purpose of the present invention is achieved by the following technical solutions. A method for setting form-field operation permission of a workflow is provided, where the workflow includes a start node and an approval node, and form-field operation permission of the start node and that of the approval node are set in different modes.

Preferably, the form-field operation permission of the start node is set in the following mode: the start node includes one or more process initiators, form operation permission of the process initiator in a system is obtained as form-field operation permission of the process initiator in the start node, the form operation permission is the permission in a system rather than in a process, and form-field operation permission of each process initiator is independent.

Preferably, the form-field operation permission of the approval node is set as follows: the approval node includes one or more approvers, form-field operation permission of each approver in the approval node is customized, the form-field operation permission is the permission in a process, not the permission in a system, and form-field operation permission of each approver is independent.

A method for setting form-field operation permission of an approval node is provided, where the approval node includes one or more approvers, and form-field operation permission of each approver in the approval node is customized.

Preferably, customizing form-field operation permission of an approver includes: selecting an approver from the approval node; displaying default settings of the form-field operation permission after selecting the approver; and modifying the default settings of the form-field operation permission according to the approval item of the selected approver in a workflow.

Preferably, the default form-field operation permission is as follows: having all viewing permissions of form fields, and not having any modification permission of the form fields; or having all viewing permissions and all modification permissions of form fields; or not having any viewing permission or modification permission of the form fields.

Preferably, the approver is a role, the role is set in two modes, one is to directly select a role and authorize approval permission, and the other is to determine a role according to a department level and authorize approval permission; the role is an independent individual rather than a group or class, one role can only be related to a unique user during the same period, and one user can be related to one or more roles.

Preferably, the role belongs to a certain department, the name of the role is unique under the department, and the number of the role is unique in a system.

Preferably, during cross-department transfer of the user, the user's relation to the role in the original department is cancelled, and the user is related to a role in a new department.

Preferably, when the form fields include a confidential field and a common field, the confidential field and the common field are displayed in different modes.

### Beneficial Effects of the Invention

### Beneficial Effects

The present invention has the following beneficial effects: (1) In the present invention, some of fields are set to be modifiable by a corresponding approver according to an approval item of the approver, and when a certain field in a form needs to be modified, the approver can modify the field directly without rejecting the form and reinitiating a process, thus reducing the approval cycle and also reducing workloads of the former approvers.

The start node and the approval node have different permission setting modes. A process initiator/requester/submitter at the start node obtains form-field permission (the form permission in the system granted according to daily work content of the submitter) of a form corresponding to the approval process in the system, and an approver at the approval node obtains "form-field permission of the form corresponding to the approval process" which is independently set for the approval node of process. The start node and the approval node have different permission setting modes; therefore, the process initiator/requester/submitter at the start node and the approver at the approval node obtain form-field permissions in different modes, where the process initiator/requester/submitter obtains the form-field permission in the system, and the approver at the approval node obtains the form-field permission (which is not the form-field permission in the system) that is independently set for the approver at the approval node. The start node and the approval node have different permission setting modes, thus meeting different permission requirements of form-field of the process's initiator/requester/submitter and the approver at the approval node.

For example, a sales person A in a Shanghai branch company submits a sales contract from Shanghai for approval. In the approval process, there are six approval nodes in total. At an approval node 2, a person B in a Chengdu branch company is set as an approver at the approval node (to approve product technical requirements in the contract); at an approval node 5, the person B in the Chengdu branch company is also set as an approver at the approval node (to approve the mode of transportation in the contract). The person B in the Chengdu branch company does not have the permission in the system to view or modify any field of a sales contract from Shanghai (because the person B in Chengdu is not responsible for sales work of Shanghai market, but is responsible for sales work of Chengdu market). However, in the method according to the present application, the person B may be authorized at the approval node 2 to view or modify a field related to the product technical requirements in the contract, and the person B may be authorized at the approval node 5 to view or modify a field related to transportation in the contract, while the sales person A directly uses form permission of the sales contract in the system (because the sales person A is in the Shanghai branch company, according to daily work of the sales person, the sales person A is already authorized in the system to view or modify the sales contract from Shanghai), thus not only meeting different requirements on form-field permissions of the start node and the approval node, but also achieving setting different form-field permission according to different approval requirements of different approval nodes.

For example, an approval process of a reimbursement form involves six approvers in total (that is, there are six approval nodes, and there is one approver at each approval node). The first five approvers have finished approval, and the last approver considers that the reimbursement needs to be modified. At this point, the last approver may directly modify the reimbursement amount, without rejecting the reimbursement form and reinitiating an approval process, thus reducing the approval workloads of the first five approvers in re-initiation of the approval process, and reducing the approval time required by the first five approvers in re-initiation of the approval process
(2) In the present invention, some fields are set to be viewable by a corresponding approver according to an approval item of the approver, so that the approver can view information required for approval but cannot view other information, thus ensuring information security.
   For example, in an approval process before signing a contract involving sales approval, technical approval and financial approval, the following settings may be performed: Because the contract is signed by a sales person, a sales approver may be set to be able to view all fields in the form and modify all the fields. Because a technician needs to approve whether the technical requirements in the contract are feasible, a technical approver is set to be allowed to view and modify only form fields of the technical aspect (such as the product technical requirements). Because a financial officer needs to approve financially whether the contract should be signed or not, a financial approver is set to be allowed to only view form fields of the financial aspect (such as the product model, unit price, quantity, and invoice type), but is not allowed to modify the form fields. The information such as the customer manager and contact information cannot be viewed by irrelevant persons (such as the financial approver), thus preventing leakage of related information and ensuring information security.
(3) The role of the approval operation in the workflow is an independent individual rather than a conventional role of a group or class nature. Even if changes on an employee or a user have occurred (such as transfer or dismission), or if the approval permissions of the employee have changed, it is only necessary to relate the employee to a new role, or adjust the approval permissions of the existing role accordingly, but not necessary to reset or adjust processes. As setting is convenient and no errors or omissions will occur, the normal running of the enterprise will not be affected, and the reliability of the workflow is greatly improved. The role is taken as the subject of the approval permission according to the nature of the post number at the approval node. The user determines which approval tasks are available according to the role. The user only needs to perform approval operations based on the permission of the related role. It is clear and simple to understand. Each role having the nature of a post number or a work station number is a minimum unit of the subject of work. The present application can well satisfy different approval requirements of each role.
(4) The role is one-to-one related to the user. One role can be related to a unique user during the same period. The advantage of this is that whenever a user is created, no operation of assigning permissions is required any more, as long as the user is related to a role, and changes on the permissions of the role are much fewer than the changes on the permissions of the user in a conventional mechanism. Few changes occur in the quantity of roles that are each an independent individual in nature (a post number or a work station number in nature). Although there is large employee turnover, few changes occur in the post number/work station number (even if there is no change in a certain period, that is, the role does not change). This greatly simplifies user's permission management and reduces system overheads.
(5) The operations such as dynamic management, recruitment, and transfer are simple, convenient, efficient and highly reliable. The application of recruitment or departure or transfer in the approval process is simple. The subject of the approval operation of the workflow is the role. When an employee or a user has changed, the approval process does not need to be reset (it only needs to cancel the relation or relate the user to the role). For the user who is no longer in the role of the post number or work station number, the relation to the role is cancelled, and the user who takes over the post number or work station number is related to the role of the post number. Therefore, the user related to the role automatically obtains the related tasks and permissions of the role in the approval workflow, without resetting the approval workflow or re-authorizing the role in the workflow, thus greatly improving the efficiency, security, and reliability of the process setting.
(6) The role belongs to a certain department, and the department of the role cannot be replaced. Reasons why the department cannot be replaced for the role are as follows. Reason 1: As the role in the present application is equivalent to a work station number or a post number in nature, different work station numbers or post numbers have different work content or permissions. For example, a role of a sales person 1 under a sales department and a role of a developer 1 under a technical department are two completely different work station numbers or post numbers, and have different permissions. Reason 2: If the department (sales department) to which the role of the sales person 1 belongs is replaced by the technical department without changing the permissions of the role of the sales person 1, the role that owns the permissions of the sales department exists in the technical department. This leads to management confusion and security vulnerabilities.

### BRIEF DESCRIPTION OF THE DRAWINGS

### DESCRIPTION OF THE DRAWINGS

FIG. 1 is a schematic diagram in which a system directly authorizes a user in the prior art;
FIG. 2 is a schematic diagram in which a system authorizes a role having the nature of a group or class in the prior art;
FIG. 3 is a schematic diagram in which a system both directly authorizes a user and authorizes a role having the nature of a group or class in the prior art;
FIG. 4 is a flowchart of setting form-field operation permission of an approval node in the present invention;
FIG. 5 is a schematic diagram of the first case of default settings of form-field operation permission in the present invention;
FIG. 6 is a schematic diagram of the second case of default settings of form-field operation permission in the present invention;
FIG. 7 is a schematic diagram of the third case of default settings of form-field operation permission in the present invention;
FIG. 8 is a schematic diagram of an approval process in an embodiment; and
FIG. 9 is a schematic diagram of default settings of form-field operation permission in the approval process of FIG. 8.

### DETAILED DESCRIPTION

### Description of Embodiments

The technical solutions of the present invention will be described in further detail below with reference to the accompanying drawings, but the protection scope of the present invention is not limited to the following.

[Embodiment 1] A method for setting form-field operation permission of a workflow is provided, where the workflow includes a start node and an approval node, and form-field operation permission of the start node and that of the approval node are set in different modes (one approval process includes one start node, at least one approval node, and one end node). In an implementation, the operation permission includes viewing permission and modification permission.

The form-field operation permission of the start node is set in the following modes: the start node includes one or more process initiators, form operation permission of the process initiator in a system is obtained as form-field operation permission of the process initiator in the start node, the form operation permission is permission in the system, not the permission in a process, and form-field operation permission of each process initiator is independent. The process initiator is used for initiating/requesting/submitting a workflow.

The form-field operation permission of the approval node is set as follows: the approval node includes one or more approvers, form-field operation permission of each approver in the approval node is customized, the form-field operation permission is permission in a process, not the permission in a system, and form-field operation permission of each approver is independent.

For example, a sales person A initiates approval before a sales contract is signed, to determine whether the contract can be signed. The form fields include customer name, product model, quantity, unit price, technical requirements, delivery date, and place of delivery; the approvers include a sales supervisor B, a financial officer C, a technician D, production personnel E, and a manager F. If the sales person A has permissions in a system to view/modify the customer name, product model, quantity, unit price, technical requirements, and delivery date, the sales person A also has the permissions in the start node to view/modify the customer name, product model, quantity, unit price, technical requirements, and delivery date. Because the sales supervisor B is required to review the sales contract thoroughly, the sales supervisor B is granted the permission to view/modify the customer name, product model, quantity, unit price, technical requirements, delivery date, and place of delivery. Because the financial officer C only needs to approve financial-related information, the financial officer C is granted the permission to view/modify the product model, quantity, and unit price. Because the technician D only needs to approve technical-related information, the technician D is granted the permission to view/modify the technical requirements. Because the production personnel E only needs to approve production-related information, the production personnel E is granted the permission to view/modify the delivery date. Because the manager F needs to review the sales contract thoroughly, the manager F is granted the permission to view/modify the customer name, product model, quantity, unit price, technical requirements, delivery date, and place of delivery.

As shown in FIG. 4, a method for setting form-field operation permission of an approval node is provided. The approval node includes one or more approvers, form-field operation permission of each approver in the approval node is customized, and form-field operation permission of each approver is independent.

Customizing form-field operation permission of an approver includes: selecting an approver from the approval node; displaying default settings of the form-field operation permission after selecting the approver; and modifying the default settings of the form-field operation permission according to an approval item of the selected approver in a workflow.

In an implementation, the operation permission includes viewing permission and modification permission. When an approver does not have the permission to view a certain field, the field is displayed as a symbol "*" to the approver (for example, when an approver responsible for technique cannot view a contract amount field in a contract approval process at a certain approval node, no specific value is displayed in the contract amount field; instead, the specific value is displayed as a symbol "*", or the value of the field may also be replaced with another symbol. If the approver is authorized to view and modify the contract amount field, the approver can view the value of the contract amount field and can also modify the value of the contract amount field).

For example, the approval node includes an approver A, an approver B, and an approver C. The approver A performs technical approval, the approver B performs financial approval, and the approver C performs production approval. In this case, a specific permission operation is as follows: selecting the approver A, and based on the default form operation permission, modifying permission of the approval A to view/modify the technical requirements; selecting the approver B, and based on the default form operation permission, modifying permission of the approver B to view/modify the product model, unit price, and quantity; and selecting the approver C, and based on the default form operation permission, modifying permission of the approver C to view the product model and quantity, and permission to view/modify the delivery date.

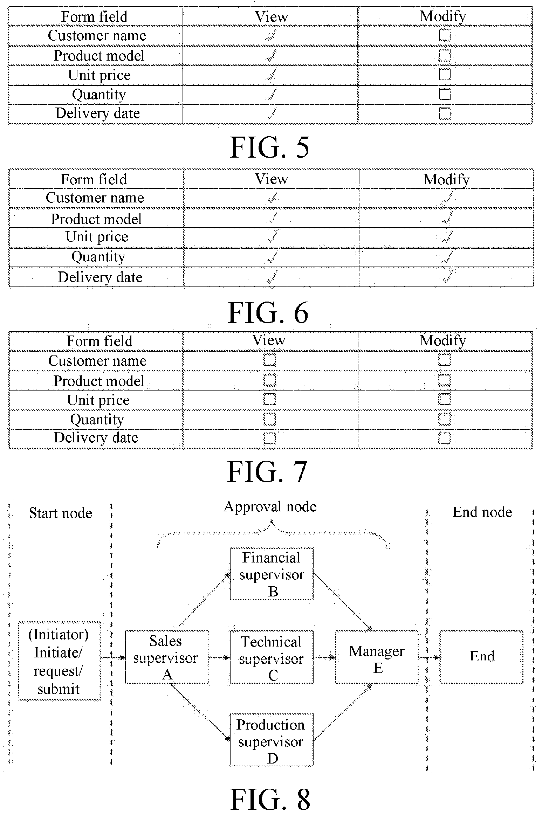

The default form-field operation permission is: having all viewing permissions of form fields and not having any modification permission of the form fields, where as shown in FIG. 5, the viewing options corresponding to the customer name, product model, unit price, quantity, and delivery date in the figure are all checked, and none of the modification options is checked; or having all viewing permissions and all modification permissions of form fields, where as shown in FIG. 6, the viewing options and modification options corresponding to the customer name, product model, unit price, quantity, and delivery date in the figure are all checked; or not having any viewing permission or modification permission of form fields, where as shown in FIG. 7, none of the viewing options and modification options corresponding to the customer name, product model, unit price, quantity, and delivery date in the figure is checked.

The approver is a role, and the role is set in two modes. One is to directly select a role and grant approval permission. The other is to determine a role according to a department level and grant approval permission. The role is an independent individual rather than a group or class, one role can only be related to a unique user during the same period, and one user is related to one or more roles.

The level is determined according to a hierarchical relation between departments. An approval role determined according to the level may be the process submitter role itself, or may be the department supervisor role of the department of the corresponding level

Defining a role: A role does not have the nature of a group/a class/a category/a post/a position/a type of work or the like, but has a non-collective nature. The role is unique and is an independent individual. Applied in an enterprise or an institution, the role is equivalent to a post number (the post number herein is not a post, one post may have multiple employees at the same time, but one post number can only correspond to one employee during the same period).

For example, in a company system, the following roles may be created: a general manager, a deputy general manager 1, a deputy general manager 2, a manager of Beijing sales department I, a manager of Beijing sales department II, a manager of Beijing sales department III, a Shanghai sales engineer 1, a Shanghai sales engineer 2, a Shanghai sales engineer 3, a Shanghai sales engineer 4, a Shanghai sales engineer 5, and so on. The concept of conventional roles has the nature a group/a class/a post/a position/a type of work type, and one role can correspond to multiple users. In the present application, the concept of "role" is equivalent to a post number/work station number, and is also similar to the role in the film and television drama: one role (in childhood, juvenile, middle-age...) can be played by only one actor or actress at the same time, but one actor or actress may play multiple roles. The relation between users and roles is as follows: If Zhang San, the company's employee, serves as a deputy general manager 2 of the company and also serves as a manager of Beijing sales department I, the roles which Zhang San needs to be related to are the deputy general manager 2 and the manager of Beijing sales department I, and Zhang San has the permissions of the two roles.

The user determines the permissions through its relation to the role. If the permissions of the user need modification, the permissions possessed by the role are adjusted to achieve the purpose of changing the permissions of the user related to the role. Once the user is related to the role, the user owns all operation permissions of the role.

A role is in a one-to-one relation to a user (when the role is related to one user, other users can no longer be related to the role; if the role is not related to the user, the role can be selected to be related to another user). A user is in a one-to-many relation to roles (one user can be related to multiple roles at the same time).

The role belongs to a certain department, the name of the role is unique under the department, and the number of the role is unique in a system.

During cross-department transfer of the user, the user's relation to the role in the original department is cancelled, and the user is related to a role in a new department.

After the role is created, the role may be related to a user in the process of creating the user, or may be related to at any time after the user is created. After the user is related to the role, the user can be released from the relation to the role at any time, and the relation between the user and another role may be created at any time.

When the form fields include a confidential field and a common field, the confidential field and the common field are displayed in different modes, so as to remind an operator during performing field permission. For example, the common field is displayed in Song typeface with a font size of four, and the confidential field is displayed in Song typeface in bold with a font size of four.

[Embodiment 2] Custom settings for form-field operation permission of an approval node are described in the following with a specific example.

FIG. 8 shows an approval process before a sales contract is signed. The process includes a start node, approval nodes (there are five approval nodes in FIG. 8), and an end node. The start node includes an initiator for initiating/requesting/submitting the approval process of the sales contract. The approval node includes a sales supervisor A, a financial supervisor B, a technical supervisor C, a production supervisor D, and a manager E. The sales supervisor A is responsible for approval of all information of the sales contract, the financial supervisor B is responsible for financial approval of the sales contract, the technical supervisor C is responsible for technical approval of the sales contract, the production supervisor D is responsible for production approval of the sales contract, and the manager E is responsible for approval of all information, except customer information, of the sales contract (that is, the form-field operation permission of each approver in each of the five approval nodes is customized).

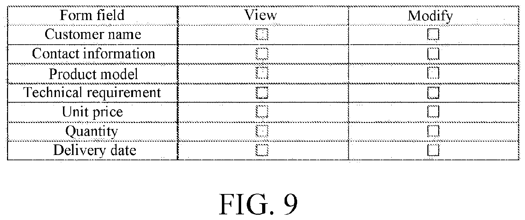

Default setting of the form-field operation permission of the sales contract is that as follows: no viewing permission or modification permission of form-field is granted, as shown in FIG. 9, where the customer name and the contact information are confidential fields and are displayed in bold.

A specific permission setting process of the approvers is as follows: Permission setting of the sales supervisor A: selecting the sales supervisor A from the approval node, displaying the default setting of the form-field operation permission of the sales contract, and then checking in the boxes corresponding to the viewing column and the modification column behind the customer name, contact information, product model, technical requirements, unit price, quantity, and delivery date.

Permission setting of the financial supervisor B: selecting the financial supervisor B from the approval node, displaying the default settings of the form-field operation permission of the sales contract, and then checking in boxes corresponding to the viewing column behind the product model, unit price, and quantity.

Permission setting of the technical supervisor C: selecting the technical supervisor C from the approval node, displaying the default settings of the form-field operation permission of the sales contract, and then checking in the boxes corresponding to the viewing column and the modification column behind the product model and technical requirements.

Permission setting of the production supervisor D: selecting the production supervisor D from the approval nodes, displaying the default settings of the form-field operation permission of the sales contract, and then checking in the boxes corresponding to the viewing column behind the product model, quantity, and delivery data.

Permission setting of the manager E: selecting the manager E from the approval node, displaying the default settings of the form-field operation permission of the sales contract, and then checking in the boxes corresponding to the viewing column and the modification column behind the product model, technical requirements, unit price, quantity, and delivery date.

The above is only a preferred embodiment of the present invention, and it should be understood that the present invention is not limited to the forms disclosed herein, and is not to be construed as being limited to the other embodiments, but may be used in various other combinations, modifications and environments. Modification can be made through the techniques or knowledge of the above teachings or related art within the scope of the teachings herein. All changes and modifications made by the skilled in the art are intended to be within the scope of the appended claims.

## Claims

1. A method for setting form-field operation permission of a workflow, wherein a workflow comprises a start node and an approval node, and the form-field operation permission of said start node and that of said approval node are set in different modes.

2. The method for setting form-field operation permission of a workflow according to claim 1, wherein the form-field operation permission of said start node is set in the following mode: said start node comprises one or more process initiators, form operation permission of the process initiator in a system is obtained as the form-field operation permission of the process initiator in said start node, the form operation permission is the permission in the system, not the permission in a process, and the form-field operation permission of each process initiator is independent.

3. The method for setting form-field operation permission of a workflow according to claim 1, wherein the form-field operation permission of said approval node is set as follows: said approval node comprises one or more approvers, the form-field operation permission of each approver in said approval node is customized, the form-field operation permission is the permission in a process, not the permission in a system, and the form-field operation permission of each approver is independent.

4. A method for setting form-field operation permission of an approval node, wherein said approval node comprises one or more approvers, and the form-field operation permission of each approver in said approval node is customized.

5. The method for setting form-field operation permission of an approval node according to claim 4, wherein customizing the form-field operation permission of an approver comprises: selecting an approver from said approval node;
displaying default settings of the form-field operation permission after selecting the approver; and
modifying the default settings of the form-field operation permission according to the approval item of the selected approver in a workflow.

6. The method for setting form-field operation permission of an approval node according to claim 5, wherein the default form-field operation permission is as follows: having all viewing permissions of form fields, and not having any modification permission of the form fields; or
having all viewing permissions and all modification permissions of form fields; or
not having any viewing permission or modification permission of form fields.

7. The method for setting form-field operation permission of an approval node according to claim 4, wherein the approver is a role, the role is set in two modes, one is to directly select the role and authorize approval permission, and the other is to determine the role according to a department level and authorize approval permission; the role is an independent individual rather than a group or a class, one role can only be related to a unique user during the same period, and one user can be related to one or more roles.

8. The method for setting form-field operation permission of an approval node according to claim 7, wherein the role belongs to a certain department, the name of the role is unique under the department, and the number of the role is unique in a system.

9. The method for setting form-field operation permission of an approval node according to claim 8, wherein during cross-department transfer of the user, the user's relation to the role in the original department is cancelled, and the user is related to a role in a new department.

10. The method for setting form-field operation permission of an approval node according to claim 4, wherein when the form fields comprise a confidential field and a common field, the confidential field and the common field are displayed in different modes.
